# EUROPÄISCHE PATENTSCHRIFT

(11) **EP 1 650 471 B1**
(45) Veröffentlichungstag und Bekanntmachung des Hinweises auf die Patenterteilung: **06.02.2008**
(21) Anmeldenummer: 05021095.4
(22) Anmeldetag: 28.09.2005
(51) Int. Cl.: F16F 15/139, F16F 15/129

(54) **Torsionsschwingungsdämpfer**
Torsional vibration damper
Amortisseur de vibrations torsionnelles

(30) Priorität: 23.10.2004 DE 102004051701
(43) Veröffentlichungstag der Anmeldung: 26.04.2006
(73) Patentinhaber: LuK Lamellen und Kupplungsbau Beteiligungs KG, 77815 Bühl (DE)
(72) Erfinder: Junker, Uli, 77652 Griesheim (DE)

(56) Entgegenhaltungen:
- DE-A1- 4 327 017
- DE-A1- 10 028 150
- DE-A1- 10 248 133
- DE-A1- 19 857 072
- FR-A- 2 823 547
- US-A- 4 635 780
- US-A- 5 503 595
- US-A- 5 759 105

## Beschreibung

Die Erfindung betrifft einen Torsionsschwingungsdämpfer mit einem um eine Drehachse drehbaren Eingangsteil und einem relativ zu diesem verdrehbaren Ausgangsteil, wobei zwischen Eingangsteil und Ausgangsteil eine diese drehelastisch miteinander koppelnde Federeinrichtung und wenigstens eine Reibeinrichtung, die zumindest ein axial verspanntes, ringartiges Element umfasst, vorgesehen sind. Derartige Torsionsschwingungsdämpfer sind beispielsweise durch die DE 43 27 017 C2 und die DE 102 48 133 A1 bekannt geworden. Die Reibeinrichtungen bestehen dabei aus einer Vielzahl von axial hintereinander angeordneten Bauelementen.

Der vorliegenden Erfindung lag die Aufgabe zugrunde, eine Reibeinrichtung zu schaffen, die sehr einfach im Aufbau ist und auch eine besonders einfache Montage des Torsionsschwingungsdämpfers gewährleistet.

Dies wird gemäß der vorliegenden Erfindung dadurch erzielt, dass das axial verspannte, ringartige Element ein Verbundbauteil bildet, welches einen tellerfederartigen, ringförmigen Energiespeicher aufweist, der als Träger für beidseits desselben aufgebrachtes Reibmaterial dient, wobei das ringartige Element axial zwischen zumindest zwei vom Eingangsteil oder Ausgangsteil getragenen Reibflächen verspannt ist, so dass die Reibflächen mit dem Reibmaterial in Reibkontakt stehen, wobei das ringartige Reibelement weiterhin Antriebsbereiche zur Verdrehung desselben aufweist, die von dem anderen Teil (Eingangsteil oder Ausgangsteil) bei einer Rotation der beiden Teile zueinander antreibbar sind. Die Reibeinrichtung des Torsionsschwingungsdämpfers und somit auch der Torsionsschwingungsdämpfer selbst, besitzen somit einen besonders einfachen Aufbau, da praktisch nur ein ringartiges Element zur Bildung der Hystereseeinrichtung bzw. Reibeinrichtung axial zwischen die Reibflächen montiert werden muss. Bei dem vorerwähnten Stand der Technik müssen zur Bildung einer solchen Reibeinrichtung mindestens drei Elemente montiert werden, nämlich ein das Reibmaterial aufweisendes Element, eine Anpressscheibe und eine Tellerfeder als Energiespeicher zum Aufbau des Reibmomentes.

Das Reibmaterial kann auf den ringförmigen Energiespeicher aufgespritzt sein. Dies kann beispielsweise in einem so genannten Spritzwerkzeug erfolgen. Bei einer derartigen Ausgestaltung entsteht eine feste Verbindung zwischen dem Energiespeicher und dem Reibmaterial. Diese Verbindung kann formschlüssig und/oder durch Haftung zwischen den verschiedenen Werkstoffen erfolgen.

Das Reibmaterial kann jedoch auch durch sektorförmige Elemente gebildet sein, die zum Beispiel auf den ringförmigen Energiespeicher aufgeschoben werden können, nämlich von radial außen und/oder von radial innen. Dabei können die sektorförmigen Elemente mit dem ringförmigen Energiespeicher einen Formschluss besitzen, der gleichzeitig als Schnappverbindung bzw. Clipverbindung ausgebildet sein kann.

Besonders vorteilhaft kann es sein, wenn die Antriebsbereiche des ringartigen Elementes durch radial hervorstehende Arme gebildet sind, die ebenfalls zumindest teilweise aus dem Reibmaterial, welches die Reibflächen des ringartigen Elementes bildet, bestehen. Alternativ kann auch der ringförmige Energiespeicher Ausleger angeformt haben zur Bildung der Antriebsbereiche. Zweckmäßig kann es weiterhin sein, wenn die Ausleger bzw. Arme des ringförmigen
Energiespeichers mit Kunststoff bzw. Reibmaterial umspritzt sind.

Weitere vorteilhafte konstruktive und/oder funktionelle sowie herstellungstechnische Merkmale sind in der nun folgenden Figurenbeschreibung enthalten.

Dabei zeigen:
- Figur 1: eine Torsionsschwingungsdämpfungseinrichtung,
- Figur 2: eine Reibscheibe in Ansicht.

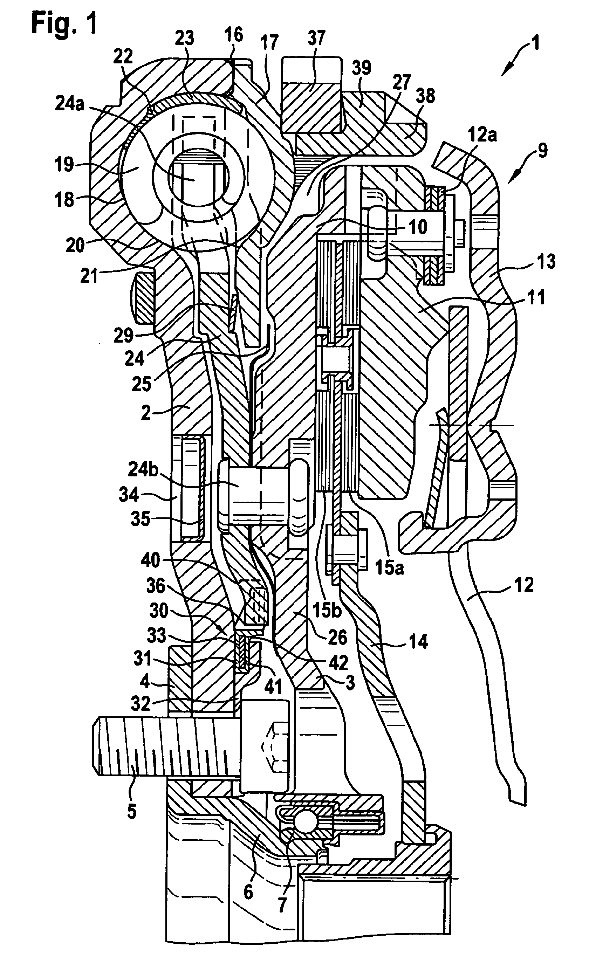

Figur 1 zeigt die obere Hälfte einer Torsionsschwingungsdämpfungseinrichtung, die hier durch ein geteiltes Schwungrad 1 gebildet ist, das ein primäres Schwungmassenteil als Eingangsteil 2 und ein sekundäres Schwungmassenteil als Ausgangsteil 3 besitzt.

Das Schwungscheibenteil 2 ist auf einem Lagerflansch 4 aufgenommen und zentriert, wobei durch das Schwungscheibenteil 2 und den Lagerflansch 4 radial innen Schrauben 5 greifen, mit denen das geteilte Schwungrad 1 unter Zwischenlegung eines Verstärkungsrings 32 an die Antriebswelle einer Antriebseinheit, die hier nicht gezeigt ist, angeschraubt werden kann. Auf einem axialen Vorsprung 6 des Lagerflansches 4 ist mittels eines Lagers 7 das sekundäre Schwungscheibenteil 3 relativ verdrehbar gelagert.

Das sekundäre Schwungscheibenteil 3 trägt radial außen eine Kupplung 9 mit einer Gegendruckplatte 10 und einer von einer Tellerfeder 12 beaufschlagten Anpressplatte 11, die mittels von Blattfedern 12a am Kupplungsdeckel 13 befestigt ist, wobei sich die Tellerfeder 12 ebenfalls an dem Kupplungsdeckel 13 abstützt. Der am sekundären Schwungscheibenteil 3 anliegende Kraftfluss wird mittels einer Kupplungsscheibe 14, die auch mit einem Torsionsschwingungsdämpfer ausgestattet sein kann - hier sei beispielsweise auf die DE 199 50 081 A1 und DE 199 54 676 A1 verwiesen - an eine nicht gezeigte Abtriebswelle weitergeleitet. Die Reibbeläge 15a, 15b der Kupplungsscheibe 14 sind axial zwischen der Anpressplatte 11 und der Gegendruckplatte 10 verspannbar.

Das primäre Schwungscheibenteil 2 ist topfförmig ausgestaltet und ist mittels einer Schweißnaht 16 mit einem Ringscheibenteil 17 verbunden, wodurch radial innen eine Kammer 18 gebildet wird, die Energiespeicher 19 aufnimmt, die vorzugsweise aus bogenförmigen Federn, die sich nahezu halbkreisförmig über den Umfang erstrecken können, gebildet sind. Zur primärseitigen Beaufschlagung der Energiespeicher 19 sind in dem Schwungscheibenteil 2 sowie im Ringscheibenteil 17 Anformungen 20, 21 vorgesehen. Bei Verwendung von zwei Bogenfedern als Energiespeicher 19 sind jeweils zwei im Winkelabstand von ca. 180° angeordnete Anformungen 20, 21 vorhanden, die ein Ende einer Bogenfeder beaufschlagen. Die Kammer 18 kann zumindest teilweise mit einem Schmiermittel 22 befüllt sein. Zwischen der Kammerinnenwand und dem Außenumfang der Energiespeicher 19 ist hier eine Verschleißschutzschale 23 angeordnet. Es können auch Gleit- bzw. Führungsschuhe Verwendung finden, welche die Bogenfeder in radialer und/oder axialer Richtung abstützen.

Die sekundärseitige Beaufschlagung der Energiespeicher 19 erfolgt über ein ringscheibenförmiges, axial zwischen dem primären Schwungscheibenteil 2 und dem Ringscheibenteil 17 radial in die Kammer 18 hineinreichendes Flanschteil 24, das mit dem sekundären Schwungscheibenteil 3 verbunden, vorzugsweise mittels Nieten 24b vernietet ist und zur sekundärseitigen Beaufschlagung der Energiespeicher 19 an seinem Außenumfang radial ausgerichtete Ausleger 24a aufweist.

Axial zwischen dem Flanschteil 24 und dem sekundären Schwungscheibenteil 3 ist ein Luftabweisblech 25 vorgesehen, das zur Führung eines Luftstroms zur Kühlung der Kupplung 9 dient, der von radial innen über an dem sekundären Schwungscheibenteil 3 angebrachten Öffnungen 26 nach radial außen durch den Spalt 27 zwischen dem sekundären Schwungscheibenteil 3 und der Kammerwand 17 geführt wird. Die tellerförmige Feder 29 dient zur axialen Verspannung der Teile 17, 24 und zur Abdichtung der Kammer 18.

Die zwischen den beiden Schwungscheibenteilen 2 und 3 wirksame Reibungseinrichtung 30 besteht aus einer Reibscheibe 31, die an ihrem Außenumfang mit einem Außenprofil, welches radiale Arme 36 bildet, versehen ist. Die Arme 36 greifen in ein Innenprofil 40 des Flanschteils 24.

Das Innenprofil 40 des Flanschteiles 24 umfasst an der Innenkontur des Flanschteiles 24 eingebrachte Ausschnitte, in welche sich die Arme 36, vorzugsweise mit Verdrehspiel, radial hineinerstrecken. Durch das Vorsehen eines Verdrehspieles zwischen den Armen 36 und den diesen zugeordneten Freischnitten im Flanschteil 24 wird gewährleistet, dass die Reibeinrichtung 30 bei Drehsinnumkehr zwischen den Schwungscheibenteilen 2, 3 über einen vorbestimmten, dem Spiel entsprechenden Verdrehwinkel unwirksam ist. Es entsteht also dadurch eine so genannte verschleppte Reibeinrichtung 30.

Der radial innere ringförmige Bereich 33 der Reibscheibe 31 ist axial zwischen zwei mit diesem zusammenwirkenden Reibflächen verspannt, die bei dem dargestellten Ausführungsbeispiel einerseits durch Bereiche des Schwungscheibenteils 2 und andererseits durch die radial äußeren Bereiche des ringförmigen Bauteiles 32 gebildet sind. Das ringförmige Bauteil 32 dient gleichzeitig als Abstützscheibe für die Köpfe der Schrauben 5. Somit sind hier die in Reibeingriff stehenden Elemente bzw. Reibflächen vom Schwungscheibenteil 2 getragen. Die Ansteuerung der Reibungseinrichtung 30 erfolgt über die vom Schwungscheibenteil 3 getragenen Profilierungen 40, welche Mitnahmebereiche bilden für die Arme 36 der Reibscheibe 31.

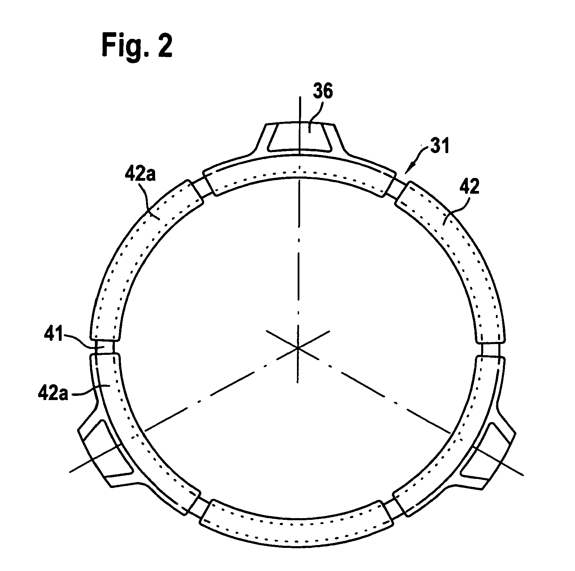

Wie in Zusammenhang mit Figur 2 ersichtlich ist, besteht eine Reibscheibe 31 aus einem tellerfederartigen, ringartigen Federelement 41, auf dem beidseits Reibmaterial 42 aufgebracht ist. Das Reibmaterial 42 kann dabei beidseits des federnden, tellerfederartigen Bauteils 41 lediglich über segmentförmige Bereiche 42a aufgebracht sein. Zweckmäßig kann es jedoch auch sein, wenn das Reibmaterial 42 sich ununterbrochen über den gesamten Umfang des tellerfederartigen Bauteils 41 erstreckt. Das Reibmaterial 42 kann auf das tellerfederartige Bauteil 41 aufgespritzt oder aufgeklebt sein, so dass eine drehfeste Verbindung zwischen dem Bauteil 41 und dem Reibmaterial vorhanden ist. Wie aus Figur 1 in Verbindung mit Figur 2 erkennbar ist, sind hier die Arme 36 zur Ansteuerung der Reibscheibe 31 einstückig mit dem die Reibflächen der Reibscheibe 31 bildenden Reibmaterial 42. Bei einer derartigen Ausgestaltung können die Arme 36 ebenfalls im Spritzwerkzeug gleichzeitig mit dem die Reibflächen bildenden Reibmaterial 42 an das tellerfederartige Bauteil 41 angeformt werden. Ansteuerarme 36 könnten jedoch auch unmittelbar durch das tellerfederartige Bauteil 41 gebildet sein. Hierfür könnte beispielsweise das Bauteil 41 einstückig angeformte Arme aufweisen. Alternativ könnte das tellerfederartige Bauteil 41 hervorstehende Arme aufweisen, die mit Reibmaterial umspritzt sind. Das die Reibflächen der Reibscheibe 31 und/oder die Arme 36 bildende Reibmaterial kann in vorteilhafter Weise aus einem Kunststoff bestehen, der gegebenenfalls faserverstärkt sein kann. So kann beispielsweise das Reibmaterial auf Polyamidbasis hergestellt sein. Zur Anpassung an die gewünschten Reibeigenschaften können noch Beimischungen vorhanden sein, zum Beispiel Polytetrafluorethylen. Als Reibmaterialbasis eignet sich auch Polyamid oder Polyimid, die ebenfalls zumindest faserverstärkt sein können. Es können zum Beispiel Glasfasern und/oder Kohlefasern zur Anwendung kommen.

In vorteilhafter Weise kann das Reibmaterial 42 auch durch eine formschlüssige Verbindung mit dem tellerfederartigen Bauteil 41 verbunden sein. Eine derartige Verbindung kann bei Verwendung von segmentartigen Reibbereichen 42a vorteilhaft sein. Hierfür können beispielsweise derartige segmentförmige Bereiche 42a mit einem Schlitz ausgebildet sein, so dass diese von radial außen oder von radial innen her auf das tellerfederartige Bauteil 41 geschoben bzw. gedrückt werden können. Dabei kann durch entsprechende Formgebung der den Schlitz eines Segmentes 42 begrenzenden, radialen Wandungen und/oder des tellerfederartigen Bauteiles 41 eine Selbstverriegelung zwischen den einzelnen Bauteilen 41, 42a durch zum Beispiel eine Schnappverbindung erfolgen.

Wie aus Figur 1 ersichtlich ist, gewährleistet die erfindungsgemäße Ausgestaltung der Reibscheibe 31 einen besonders einfachen Aufbau der Reibeinrichtung 30, da gegenüber den bisher bekannten Reibeinrichtungen die Anpressscheibe und der ein getrenntes Bauteil bildende, tellerfederartige Energiespeicher entfällt. Es muss also lediglich eine Komponente, nämlich die Reibscheibe 31, montiert werden und nicht, wie bei den bekannten Reibeinrichtungen, welche Reibmaterial verwenden, zumindest ein Reibring aus Reibmaterial, eine Anpressscheibe und eine Tellerfeder.

Durch die erfindungsgemäße Ausgestaltung einer Reibeinrichtung wird auch eine axial gedrungene Bauweise ermöglicht und auch die Montage des Gesamtaggregates bzw. der Torsionsschwingungsdämpfungseinrichtung wird vereinfacht, da lediglich eine Komponente, nämlich die Reibscheibe 31, montiert werden muss.

Zur Verhinderung von Staubeintrag in die Kammer 18 und damit zur Vermeidung der Verschmutzung des Schmiermittels 22 ist an Montageöffnungen 34, die zur Vernietung des Flanschteils mit dem sekundären Schwungscheibenteil 3 vorgesehen sind, jeweils eine Abdeckkappe 35 vorgesehen.

Der Anlasserzahnkranz 37 ist auf einem Anlagering 38 mit axialem Anschlag 39 radial außerhalb der Kupplung 9 angebracht, vorzugsweise verschweißt.

### Bezugszeichenliste

- 1: Schwungrad
- 2: Eingangsteil
- 3: Ausgangsteil
- 4: Lagerflansch
- 5: Schrauben
- 6: axialer Vorsprung
- 7: Lager
- 8:
- 9: Kupplung
- 10: Druckplatte
- 11: Anpressplatte
- 12: Tellerfeder
- 12a: Blattfedern
- 13: Kupplungsdeckel
- 14: Kupplungsscheibe
- 15a: Reibbelag
- 15b: Reibbelag
- 16: Schweißnaht
- 17: Ringscheibenteil
- 18: Kammer
- 19: Energiespeicher
- 20: Einformung
- 21: Einformung
- 22: Schmiermittel
- 23: Verschleißschutzschale
- 24: Flanschteil
- 24a: Ausleger
- 24b: Nieten
- 25: Luftabweisblech
- 26: Öffnungen
- 27: Spalt
- 29: Tellerfeder
- 30: Reibungseinrichtung
- 31: Reibscheibe
- 32: ringförmiges Bauteil
- 33: ringförmiger Bereich
- 34: Montageöffnungen
- 35: Abdeckkappe
- 36: Arme
- 37: Anlasserzahnkranz
- 38: Anlagering
- 39: axialer Anschlag
- 40: Profilierungen
- 41: tellerfederartiges Bauteil
- 42: Reibmaterial
- 42a: segmentförmige Bereiche

## Patentansprüche

1. Torsionsschwingungsdämpfer mit einem um eine Drehachse drehbaren Eingangsteil (2) und einem relativ zu diesem verdrehbaren Ausgangsteil (3), wobei zwischen Eingangsteil und Ausgangsteil eine diese drehelastisch miteinander kuppelnde Federeinrichtung (19) und wenigtens eine Reibeinrichtung (30), die zumindest eine axial verspannte, ringartige Reibscheibe (31) umfasst, vorgesehen sind, **dadurch gekennzeichnet, dass** die ringartige Reibscheibe (31) aus einem tellerfederartigen, ringförmigen Federelement (41) besteht, der als Träger dient für beidseits desselben aufgebrachtes Reibmaterial (42), wobei die ringartige Reibscheibe (31) axial zwischen zwei vom Eingangsteil (2) oder Ausgangsteil (3) getragenen Reibflächen verspannt ist, so dass die Reibflächen mit dem Reibmaterial (42) in Reibkontakt stehen und die ringartige Reibscheibe weiterhin Antriebsbereiche (36) zur Verdrehung desselben aufweist, die von dem anderen der Teile bei einer Rotation von Eingangsteil (2) und Ausgangsteil (3) antreibbar sind.

2. Torsionsschwingungsdämper nach Anspruch 1, **dadurch gekennzeichnet, dass** die ringartige Reibscheibe (31) zumindest sektorweise (42a) beidseits Reibmaterial (42) trägt, das auf den tellefederartigen, ringförmigen Federelement (41) aufgespritzt ist.

3. Torsionsschwingungsdämpfer nach Anspruch 1, **dadurch gekennzeichnet**, das die ringartige Reibscheibe (31) zumindest sektorweise beidseits Reibmaterial (42) trägt, das mit dem tellerfederartigen ringförmigen Federelement (41) über Formschluss verbunden ist.

4. Torsionsschwingungsdämpfer nach Anspruch 3, **dadurch gekennzeichnet, dass** der Formschluss durch wenigstens eine Schnappverbindung gebildet ist.

5. Torsionsschwingungsdämpfer nach Anspruch 1 bis 4, **dadurch gekennzeichnet, dass** die Antriebsbereiche (36) der federnden, ringartigenReibscheibe (31) zumindest teilweise durch das Reibmaterial (42) gebildet sind.

## Claims

1. Torsional vibration damper having an input part (2) that is rotatable around an axis of rotation and an output part (3) that is rotatable relative to the input part, there being provided between the input part and the output part a spring device (19) that couples them together in a torsionally elastic connection, and at least one friction device (30), which includes at least one axially tensioned, ring-type friction disk (31), **characterized in that** the ring-type friction disk (31) comprises a diaphragm-spring-type, ring-shaped spring element (41), which serves as the carrier for friction material (42) applied on both sides of it, the ring-type friction disk (31) being braced axially between two friction surfaces supported by the input part (2) or the output part (3), so that the friction surfaces are in frictional contact with the friction material (42) and the ring-type friction disk continues to have drive areas (36) for rotating the latter, which are drivable by the other of the parts when the input part (2) and output part (3) rotate.

2. Torsional vibration damper according to Claim 1, **characterized in that** the ring-type friction disk (31) carries friction material (42) on both sides at least in sectors (42a), which is sprayed onto the diaphragm-spring-type, ring-shaped spring element (41).

3. Torsional vibration damper according to Claim 1, **characterized in that** the ring-type friction disk (31) carries friction material (42) on both sides at least in sectors, which is connected to the diaphragm-spring-type, ring-shaped spring element (41) by positive closure.

4. Torsional vibration damper according to Claim 3, **characterized in that** the positive closure is formed by at least one snap connection.

5. Torsional vibration damper according to Claims 1 through 4, **characterized in that** the drive areas of the (36) elastic, ring-type friction disk (31) are at least partially formed by the friction material (42).

## Revendications

1. Amortisseur de vibrations de torsion comportant un élément d'entrée (2), apte à tourner autour d'un axe de rotation, et un élément de sortie (3), apte à tourner par rapport à celui-ci, dans lequel il est prévu entre l'élément d'entrée et l'élément de sortie, un dispositif à ressort (19), couplant lesdits éléments l'un à l'autre par un mouvement de rotation élastique, et au moins un dispositif de friction (30), qui comporte au moins un disque de friction (31) annulaire, bloqué dans le sens axial, **caractérisé en ce que** le disque de friction (31) annulaire est formé par un élément ressort (41) annulaire, en forme de ressort Belleville, qui fait fonction de support du matériau de friction (42) déposé sur les deux faces de celui-ci, le disque de friction (31) annulaire étant bloqué dans le sens axial entre deux surfaces de friction portées par l'élément d'entrée (2) ou l'élément de sortie (3), de telle sorte que les surfaces de friction sont en contact de frottement avec le matériau de friction (42), et le disque de friction annulaire comporte en outre des zones d'entraînement (36) qui sont destinées à entraîner en rotation ledit disque de friction et qui peuvent être actionnées par l'autre des parties lors d'une rotation de l'élément d'entrée (2) et l'élément de sortie (3).

2. Amortisseur de vibrations de torsion selon la revendication 1, **caractérisé en ce que** le disque de friction (31) annulaire, sur ses deux faces, porte au moins par secteurs (42a) un matériau de friction (42) qui est moulé par injection sur l'élément ressort (41) annulaire en forme de ressort Belleville.

3. Amortisseur de vibrations de torsion selon la revendication 1, **caractérisé en ce que** le disque de friction (31) annulaire, sur ses deux faces, porte au moins par secteurs un matériau de friction (42) qui est assemblé par conjugaison de forme avec l'élément ressort (41) annulaire en forme de ressort Belleville.

4. Amortisseur de vibrations de torsion selon la revendication 3, **caractérisé en ce que** l'assemblage par conjugaison de forme est formé par au moins un assemblage par encliquetage.

5. Amortisseur de vibrations de torsion selon l'une quelconque des revendications 1 à 4, **caractérisé en ce que** les zones d'entraînement (36) du disque de friction (31) annulaire flexible sont formées au moins partiellement par le matériau de friction (42).
